Europäisches Patentamt

European Patent Office

Office européen des brevets

(11) Veröffentlichungsnummer: **0 286 098 B1**

# EUROPÄISCHE PATENTSCHRIFT

(45) Veröffentlichungstag der Patentschrift: **27.12.91**

(51) Int. Cl.5: **A21C 11/16**

(21) Anmeldenummer: **88105562.8**

(22) Anmeldetag: **07.04.88**

(54) **Verfahren zur Herstellung von expandierten Lebensmitteln.**

(30) Priorität: **08.04.87 DE 3711840**

(43) Veröffentlichungstag der Anmeldung:
**12.10.88 Patentblatt 88/41**

(45) Bekanntmachung des Hinweises auf die
Patenterteilung:
**27.12.91 Patentblatt 91/52**

(84) Benannte Vertragsstaaten:
**AT DE FR GB IT SE**

(56) Entgegenhaltungen:
**GB-A- 2 055 545**
**GB-A- 2 073 573**
**US-A- 2 463 112**

(73) Patentinhaber: **Heinz Schaaf Nahrungsmittel-Extrusionstechnik**
**Quellenweg 14 + 19a**
**W-6277 Bad Camberg/Oberselters(DE)**

(72) Erfinder: **Schaaf, Heinz-Josef**
**Quellenweg 19a**
**W-6277 Bad Camberg-Oberselters(DE)**

(74) Vertreter: **Patentanwälte Deufel, Hertel, Le-wald**
**Isartorplatz 6 Postfach 26 02 47**
**W-8000 München 26(DE)**

**Beschreibung**

Die Erfindung betrifft ein Verfahren zur Herstellung von expandierten Lebensmitteln, wobei ein an der Düse expandierendes Teigextrudat aus der Düse eines Extruders bei höheren Temperaturen austritt und dann in einem heißen Medium einer Nachbehandlung unterzogen wird, dadurch gekennzeichnet, daß das Extrudat (105 bis 130° C) ohne Zwischenabkühlung einer starken Wärmebehandlung in heißem Öl, in Heißluft oder Heißdampf unterzogen wird, so daß eine Viskositätssenkung des Teigs und eine wesentlich stärkere Expansion bewirkt werden.

Es sind im wesentlichen zwei Verfahren zur extrusionstechnischen Herstellung von expandierten Lebensmitteln, sogenannten Snacks, bekannt.

Bei der sogenannten Direktexpansion wird der Teig bei hohen Temperaturen und Drücken verarbeitet und expandiert beim Austritt aus der Düse des Extruders in seine endgültige Form.

Bei der sogenannten indirekten Expansion wird der Teig bei geringerer Temperatur und geringerem Druck durch die Düse eines Extruders gedrückt. Dabei verkleistert der Teig im Extruder. Das sich ergebende Produkt hat Ähnlichkeit mit Teigwaren. In einem anschließenden 4 bis 8 Stunden dauernden komplizierten Trocknungsprozeß wird die Feuchte des Extrudates auf ca. 11%, reduziert und nach einer weiteren Konditionierzeit wird das Extrudat entweder in heißem Fett oder in heißer Luft zur Expansion gebracht.

Bei dem Extrusionsverfahren mit Direktexpansion wird üblicherweise mit Extrusionsfeuchten von 13% bis 22% gearbeitet, während bei der Extrusion mit indirekter Expansion die Feuchte des Rohmaterials bei ca. 28% bis 40% liegt. Die Reduzierung auf einen Feuchtigkeitsgehalt von ca. 11% erfolgt, wie vorstehend erwähnt, in einem Trocknungsprozess.

Es sind ferner verschiedene Verfahren zur Herstellung von expandierten Nahrungsmitteln bekannt, welche die Extrusion mit Direktexpansion mit einer Nachbehandlung in heißem Fett kombinieren. Dabei wird das Extrudat nach dem Austritt aus der Düse und dem Schneiden im heißen Fett gebakken. Bei dem Austritt aus der Düse wird das Extrudat durch die stattfindende Expansion und Wasserverdampfung einer Abkühlung unterworfen. Die Nachbehandlung in heißem Fett hat demnach primär einen trocknenden und röstenden Charakter, während eine Volumen- oder Texturveränderung des Lebensmittels nicht erreicht wird.

Zu dieser Gruppe gehört auch die GB-A-2055545.
Nach der Expansion eines ganz speziellen Teigs (hoher Druck, hohe Temperatur innerhalb des Extruders) schließt sich eine sogenannte "fleeting stage" an, in der der Teig extrem klebrig ist. Zusätzlich Wasser wird durch Flash-Verdampfung aufgegeben. Die geschnittenen Stücke werden, wobei ein zusätzliches Kühlen in der Düse stattgefunden hat, in Heißluft gegeben. Beim Extrudieren hat der Teig eine Temperatur von etwa 340° F. Die gebildete Röhre läuft zwischen üblichen Schneidrollen durch. Nach dem Schneiden wird das Produkt einem Heißluftstrom übergeben. Es wird darauf hingewiesen, daß die meisten Stufen in üblicher Weise durchgeführt werden. Im übrigen dürfte die bekannte Maßnahme nur für ganz bestimmte Produkte sich eignen.

Allgemein liegt der Vorteil der Extrusion mit indirekter Expansion über den Weg des getrockneten Halbproduktes (in der Regel in Form von Peletts) liegt darin, daß sehr spezifische Geschmacks- und Texturergebnisse des Lebensmittels erzielt werden können, welche in ihrer Qualität höher als die der direktexpandierten Extrudate sind. Der Nachteil des Herstellungsverfahrens mit indirekter Expansion liegt aber darin, daß eine derartige Anlage zur Herstellung der Halbprodukte und deren Trocknen sehr aufwendig und teuer ist. Außerdem ist eine Qualitätskontrolle und die Erreichung einer konstanten Qualität sehr aufwendig und nur sehr schwierig zu erreichen. Ferner ist der Energieverbrauch zur Herstellung mit diesem Verfahren sehr hoch.

Der Erfindung liegt die Aufgabe zugrunde, ein Verfahren zu schaffen, welches Lebensmittel mit Geschmacks- und Textureigenschaften erbringt, die denen der Lebensmittel entsprechen, die mit einem Verfahren mit indirekter Expansion hergestellt werden, wobei gleichzeitig die Nachteile dieses Verfahrens, insbesondere die hohen Kosten und die schwierige Qualitätsüberwachung, vermieden werden.

Diese Aufgabe wird erfindungsgemäß gelöst durch die Maßnahmen des Anspruchs 1.

Erfindungsgemäß wird das Extrudat bei höheren Temperaturen (105° bis 130° C) als bei dem bekannten Verfahren ohne Zwischenabkühlung direkt einer starken Wärmebehandlung in heißem Öl, in Heißluft, oder in Heißdampf unterzogen. Die bei der Expansion nach dem Austritt aus der Düse durch Wasserverdampfung dem Extrudat entzogene Wärme bewirkt dabei nicht eine sonst übliche Verhornung des Teiges und eine Beendigung der Expansion, sondern durch den Wärmeträger, in welchen das Extrudat geleitet wird, wird in erheblichem Umfang Wärme zugeführt, wodurch eine Viskositätssenkung des Teiges und eine wesentlich stärkere Expansion bewirkt werden. Die dabei entstehende Textur, insbesondere die Knusprigkeit und das Kaugefühl des extrudierten Lebensmittel, ist identisch mit dem sonst nur durch die Extrusion mit indirekter Expansion herstellbaren Produkt. Mit dem erfindungsgemäßen Verfahren werden demnach Lebensmittel hoher Güte erreicht, wobei auf aufwendige Anlagen zur Trocknung und Konditionierung von Halbprodukten verzichtet wird. Während eine konventionelle Anlage zur Herstellung vcn Pellets und Durchführung der erforderlichen Prozeßschritte ca. 2 Millionen DM kostet, kostet eine Anlage zur Durchführung des erfindungsgemäßen Verfahrens weniger als die Hälfte dieser Summe. Da eine langwierige Trocknung von Halbprodukten entfällt, ist die Qualitätskontrolle und die Qualitätskonstanz extrudierter und expandierter Lebensmittel einfacher. Darüber hinaus ist der Energieverbrauch bei dem erfindungsgemäßen Verfahren stark reduziert.

Gemäß einer bevorzugten Ausführungsform wird der Teig aus dem Extruder direkt in heißes Öl oder Fett extrudiert. Die Düse des Extruders ist dabei vorzugsweise in dem heißen Fett oder Öl angeordnet.

Gemäß einer weiteren bevorzugten Ausführungsform wird das Extrudat durch einen Kanal geleitet, in dem eine Temperatur und eine Feuchtigkeit herrschen, die gleich sind der Temperatur und der Feuchtigkeit des Extrudates, so daß weder ein Wärme- noch ein Feuchtigkeitsverlust des Extrudates auftritt, bevor dieses beispielsweise in heißes Öl oder Fett eingeleitet wird. In dem Kanal, durch welchen das Extrudat geleitet wird, sind vorzugsweise Dämpfe des Mediums enthalten, in welchem die Nachbehandlung des Extrudates erfolgt. Das Medium zur Nachbehandlung des Extrudates kann heißes Fett, Öl, heiße Luft oder Heißdampf sein. Beispielsweise ist es möglich, an die Düse Heißluft mit einer Temperatur von beispielsweise 600° C zu leiten.

**Patentansprüche**

1. Verfahren zur Herstellung von expandierten Lebensmitteln, wobei ein an der Düse expandierendes Teigextrudat aus der Düse eines Extruders bei höheren Temperaturen austritt und dann in einem heißen Medium einer Nachbehandlung unterzogen wird, dadurch gekennzeichnet, daß das Extrudat (105 bis 130° C) ohne Zwischenabkühlung einer starken Wärmebehandlung in heißem Öl, in Heißluft oder Heißdampf unterzogen wird, so daß eine Viskositätssenkung des Teigs und eine wesentlich stärkere Expansion bewirkt werden.

2. Verfahren nach Anspruch 1, dadurch gekennzeichnet, daß an die Düse Heißluft geleitet wird.

3. Verfahren nach Anspruch 2, dadurch gekennzeichnet, daß Heißluft von 600° C an die Düse geleitet wird.

4. Verfahren nach einem der Ansprüche 1 bis 3, dadurch gekennzeichnet, daß das Extrudat direkt in heißes Öl oder Fett extrudiert wird.

5. Verfahren nach einem der Ansprüche 1 bis 4, dadurch gekennzeichnet, daß das Extrudat durch einen Kanal geleitet wird, in dem eine Temperatur und eine Feuchte herrschen, die gleich sind der Temperatur und Feuchte des Extrudates bei Austritt aus der Düse, so daß kein Wärme- und Feuchtigkeitsverlust des Extrudates auftritt.

6. Verfahren nach Anspruch 5, dadurch gekennzeichnet daß in dem Kanal sich Heißdampf bzw. Heißluft, je nachdem, in welchem Medium die Nachbehandlung vorgenommen wird, befindet.

**Claims**

1. Method of preparing of expanded food stuffs, a dough extrudate expanding at the nozzle leaving the nozzle of an extruder at higher temperatures and then undergoing further processing in a hot medium, characterized in that the extrudate (105 to 130° C) without intermediate cooling is subjected to a strong heat treatment in hot oil, in hot air or hot steam, such that a decrease of viscosity of the dough and a substantial stronger expansion are brought about.

2. Method according to claim 1, characterized in that hot air is guided to the nozzle.

3. Method according to claim 2, characterized in that hot air of 600° C is guided to the nozzle.

4. Method according to one of claims 1-3, characterized in that the extrudate directly is extruded into hot oil or hot fat.

5. Method according to one of claims 1-4, characterized in that the extrudate is guided through a channel in which a temperature and a humidity prevail which are equal to the temperature and humidity of the extrudate on leaving the nozzle so that no loss of heat and humidity of the extrudate are brought about.

6. Method according to claim 5, characterized in that in the channel hot steam or hot air respectively dependent on the fact in which fluid the further treatment will take place, is present.

**Revendications**

1. Procédé pour fabriquer des aliments expansés, selon lequel un produit extrudé pâteux, expansé au niveau d'une buse, sort de la buse d'une extrudeuse à des températures accrues et est ensuite soumis à un traitement complémentaire dans un milieu chaud, caractérisé en ce que le produit extrudé (105 à 130° C) est soumis, sans refroidissement intermédiaire, à un traitement thermique intense dans de l'huile chaude, de l'air chaud ou de la vapeur chaude, de manière à provoquer une réduction de la viscosité de la pâte et une expansion nettement plus importante.

2. Procédé selon la revendication 1, caractérisé en ce que de l'air chaud est envoyé à la buse.

3. Procédé selon la revendication 2, caractérisé en ce que de l'air chaud à 600° C est envoyé à la buse.

4. Procédé selon l'une des revendications 1 à 3, caractérisé en ce que le produit extrudé est extrudé directement dans de l'huile ou dans de la graisse chaude.

5. Procédé selon l'une des revendications 1 à 4, caractérisé en ce que le produit extrudé est guidé dans un canal, dans lequel règne une température et une humidité, qui sont égales à la température et à l'humidité du produit extrudé à sa sortie hors de la buse, de sorte qu'il n'apparaît aucune perte de chaleur et d'humidité du produit extrudé.

6. Procédé selon la revendication 5, caractérisé en ce que de la vapeur chaude ou de l'air chaud est présent dans le canal en fonction du milieu dans lequel s'effectue le traitement complémentaire.